# EUROPEAN PATENT SPECIFICATION

(11) **EP 1 669 569 B1**
(45) Date of publication and mention of the grant of the patent: **23.07.2008**
(21) Application number: 05257521.4
(22) Date of filing: 07.12.2005
(51) Int. Cl.: F01N 7/18, F16L 27/053, F16F 3/04

(54) **Exhaust coupling**
Abgaskupplung
Raccord d'échappement

(30) Priority: 08.12.2004 GB 0426856
(43) Date of publication of application: 14.06.2006
(73) Proprietor: Thomson Pettie Tube Products Limited, Carluke, Lanarkshire ML8 5EJ (GB)
(72) Inventor: Paterson, John Graeme, Falkirk, FK1 5QQ (GB); Thomson, Terence McKenna, Ballasalla, Isle of Man IM9 2EW (GB)
(74) Representative: Murnane, Graham John

(56) References cited:
- EP-A- 0 645 528
- EP-A- 0 810 354
- WO-A-98/39593
- DE-A1- 4 228 898
- DE-A1- 19 519 603
- FR-A- 2 763 661
- US-A- 2 222 146
- US-A- 5 437 479

## Description

The present invention relates to exhaust couplings.

Exhaust couplings are provided between two tube or pipe sections to connect the sections while allowing movement between the sections. The movement may be axial movement of the tubes towards or away from each other, rotational movement of one tube relative to the other, or pivoting of one tube relative to the other. Such movements can result from changes in engine torque, gear changes, or uneven road surfaces. Without this movement, damage to a component of the exhaust can occur.

One form of existing exhaust couplings is to use a helically wound flexible joint. However, it is known that such joints deteriorate significantly over time. Another form of existing exhaust coupling has a flange welded to each pipe section, and a nut and bolt arrangement draws the flanges towards each other. Typically, a spring is provided at each bolt. However, the ends of each section are brought into contact by the nut and bolt arrangement and may be held in this position using considerable force. Therefore, the spring provides no resilient shock absorption when a compressive load is applied. Furthermore, when a tensile pulse or cyclic load is applied, the ends of the pipe sections will be temporarily separated and then brought back into contact by the spring. This contact results in an impact load being applied to the whole exhaust. These inadequacies of the coupling can cause premature wear and failure of the coupling.

A modification of the exhaust coupling using a nut and bolt arrangement is disclosed in EP 0965015. For this apparatus, a first spring is provided between the flanges and the nut and a second spring is provided between each of the flanges. The first spring functions to urge the flanges together so that adjacent ends of the pipe sections are in contact, while the second spring provides a biasing force in the opposite direction (although the force is not sufficient to separate the two pipe sections). Also, the flanges are not welded to the pipe sections, or permanently connected in any other way, and so, as before, the coupling only provides shock absorption for tensile axial loads. The same problems with deterioration due to impacting of the ends of the sections can occur. It is stated that the second spring reduces the force by which each end of the two sections are held in contact and this allows for easier relative movement between the two segments. Otherwise, the second spring provides no shock absorption. Also, since the flanges are not fixed to the tube sections, the degree of movement of each pipe section relative to the other may be excessive under certain operating conditions.

According to the present invention, there is provided an exhaust coupling for axially connecting a first and second pipe segment according to claim 1.

The neutral state can be regarded as the position of the first pipe segment relative to the second pipe segment during an unloaded condition.

Preferably, the biasing means is adapted to bias the first and second pipe segments from both an extended and a compressed state towards the neutral state.

Preferably the biasing means also provides the connection means.

Preferably a plurality of biasing means is provided circumferentially around the first and second pipe segments. Preferably three biasing means are provided circumferentially and equidistant around the first and second pipe segments.

The biasing means comprises a first spring interposing the first and second flange. Preferably the first spring has a neutral position such that the axial gap exists between adjacent ends of the first and second pipe segments. The first spring may provide shock absorption in both a tensile and compressive loading direction.

The biasing means includes a second spring interposing the first and second flanges. The first spring and the second spring are co-axially mounted. Preferably the first spring is a tension spring having engaging means provided at each end for engaging with a retaining portion provided at each of the first and second flanges. Preferably the engaging means comprises a loop member for looping around the retaining portion. The second spring comprises a compression spring which is provided around the tension spring.

Preferably each of the first and second pipe segments has a flared portion provided at the adjacent ends of the first and second pipe segments.

Preferably the first and second flanges act upon the respective flared portion of the first and second pipe segments.

Preferably the first flange is connected to the first pipe segment.

Preferably the second flange is connected to the second pipe segment.

An embodiment of the present invention will now be described, by way of example only, with reference to the accompanying drawings, in which:
Fig. 1 is a diagrammatic view of an engine and exhaust system including an exhaust coupling according to the invention or the prior art;
Fig. 2 is a side view of an exhaust coupling according to the prior art;
Fig. 3 is a sectional side view of the exhaust coupling of Fig. 2 in (a) a first position and (b) a second position;
Fig. 4 is a side view of a first embodiment of an exhaust coupling according to the invention;
Fig. 5 is an end view of the exhaust coupling of Fig. 4;
Fig. 6 is a sectional side view of the exhaust coupling of Fig. 4;
Fig. 7 is a detailed sectional view of a portion of the exhaust coupling of Fig. 4 at a first position;
Fig. 8 is a detailed sectional view of a portion of the exhaust coupling of Fig. 4 at a second position;
Fig. 9 is a detailed sectional view of a portion of the exhaust coupling of Fig. 4 at a third position;

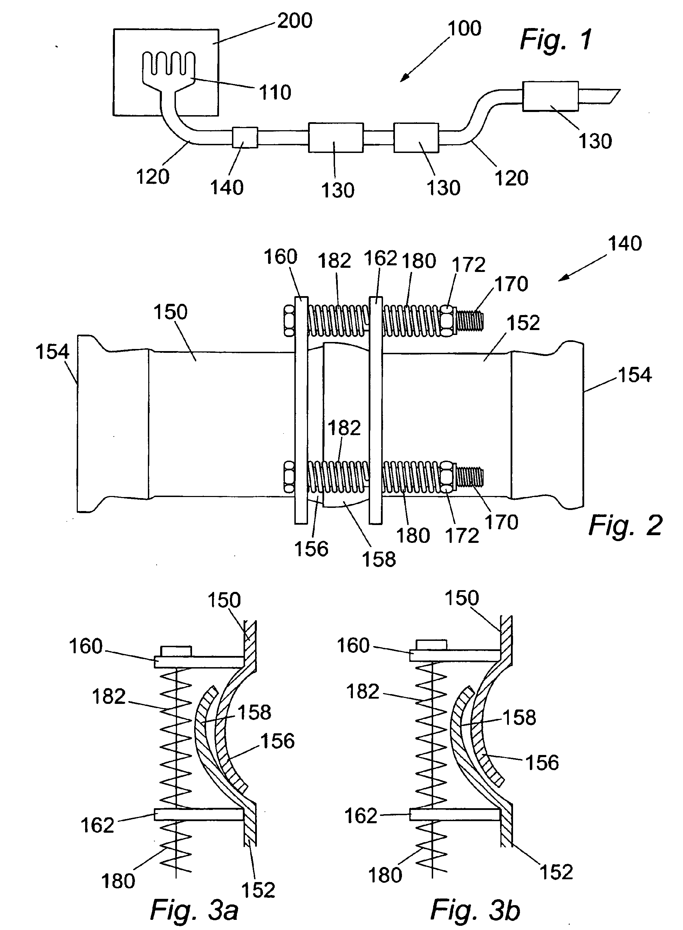

Fig. 1 shows an exhaust system 100 attached to an engine 200. The exhaust system 100 includes a manifold 110 and various pipe work 120 and a number of silencer boxes 130. Positioned at one or more locations along the pipe work is an exhaust coupling 140.

A prior art coupling is shown in more detail in Fig. 2. The coupling 140 includes a first and second pipe section 150, 152 having distal ends 154 for connection to the pipe work 120. The adjacent ends 156, 158 are bevelled and slidably engage with each other, and their profile is shown in Fig. 3.

A flange 160, 162 is slidably attached to each pipe section 150, 152 and the bevelled adjacent ends 156, 158 represent a stop for the flanges 160, 162 when they are moved towards each other. The flanges 160, 162 have three circumferentially spaced apertures for receiving a bolt 170, and threaded on each bolt 170 is a nut 172.

A first compression spring 180 is provided between each nut 172 and the second flange 162. When the nut 172 is tightened, this causes the second flange 162 to be urged towards to first flange 160 thereby causing adjacent ends 156, 158 of the pipe sections 150, 152 to abut such that the coupling 140 is in the first position as shown in Fig. 3 (a). A second spring 182, also a compression spring, is provided between each of the flanges 160, 162. The second spring 182 provides a biasing force in the opposite direction from the first spring 180 but the biasing force is not sufficient to separate the two pipe sections 150, 152. Rather, it is intended that the second spring 182 reduces the force by which each of the sections 150, 152 are held in contact.

When the exhaust coupling 140 receives an axial tensile load, the adjacent ends 156, 158 will move apart until the coupling 140 is at the position shown in Fig. 3 (b). However, when the load is removed, the adjacent ends 156, 158 will be urged back into contact and the impact can cause damage to the adjacent ends 156, 158 or spread to any of the other components of the exhaust system 100. Also, it is clear that there is no absorption of an impact in the axial compressive direction since the normal position of the adjacent ends 156, 158 is to be abutting.

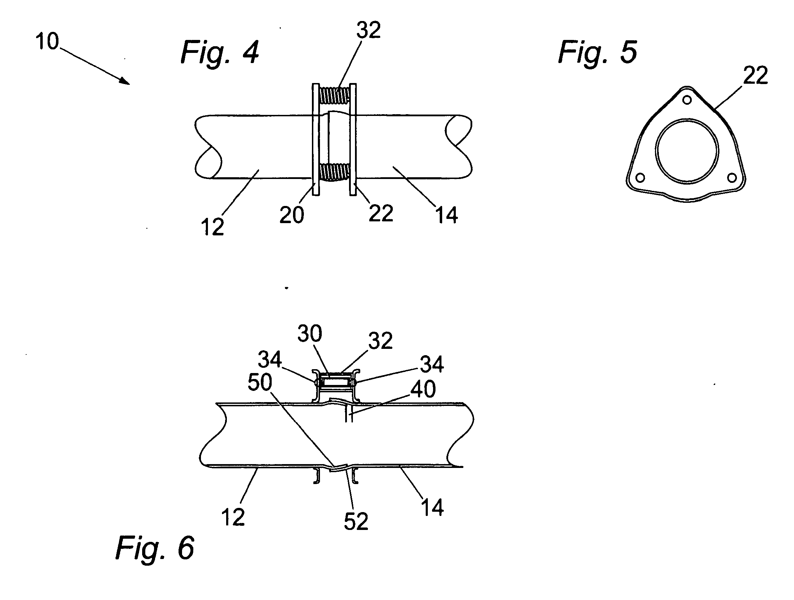

Fig. 4 shows an exhaust coupling 10 according to the present invention. The coupling 10 comprises a first flange 20 which is welded to a first pipe section 12 and a second flange 22 which is welded to a second pipe section 14. Means for connecting the first and second flanges 20, 22 are provided in the form of a first spring 30 and a second spring 32. The first and second spring 30, 32 are arranged such that, when the exhaust coupling 10 is in an unloaded or neutral state, an axial gap 40 exists between adjacent ends 50, 52 of the first and second pipe sections 12, 14.

The first spring 30 is a standard tension spring comprising a helical coil with fastening loops 34 provided at each end. A middle bar section 36 is provided at each aperture for mounting the first spring 30 using the loops 34. Around the first spring 30 is provided the second spring 32 which is a standard compression spring comprising a helical coil which offers a substantially flat loading surface at each end. Therefore, the first spring 30 and the second spring 32 are co-axially mounted. The first spring 30 also retains the second spring 32 when the coupling 10 is in an extended state.

Three of these spring arrangements are provided circumferentially and equidistant around the first and second pipe sections 12, 14.

The exhaust coupling 10 is arranged such that the first spring 30 is pre-tensioned and the second spring 32 is pre-compressed but, due to equilibrium of forces, the pipe sections 12, 14 have an unloaded or neutral state in which the axial gap 40 exists.

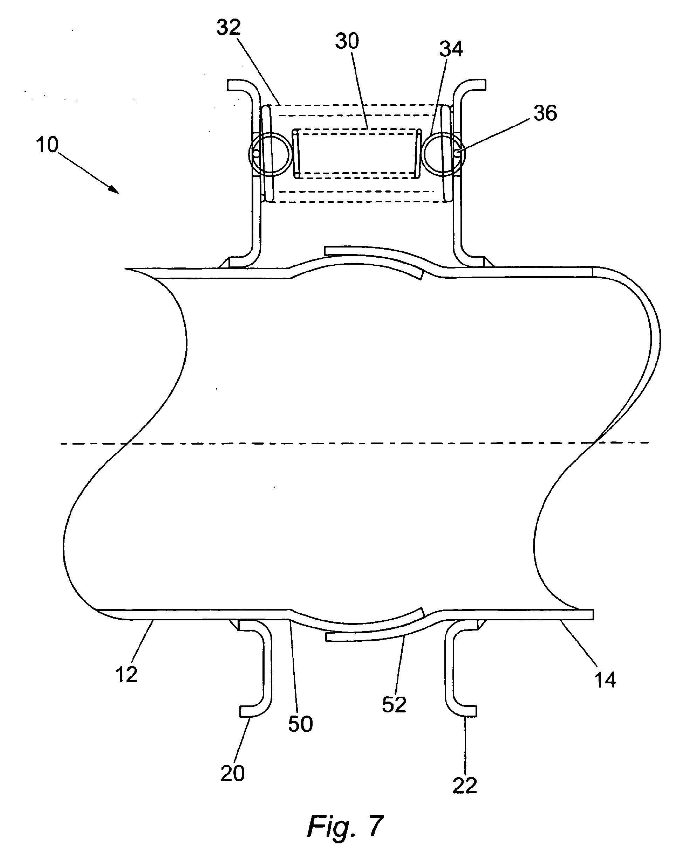

Fig. 7 shows the exhaust coupling 10 in a fully compressed state. In this state, the adjacent ends 50, 52 are abutting. However, the stiffness of at least the second spring 32 can be selected such that this state is only caused by a load which exceeds normal loading conditions. The stiffness of the first spring 30 may also contribute to absorption of impact load.

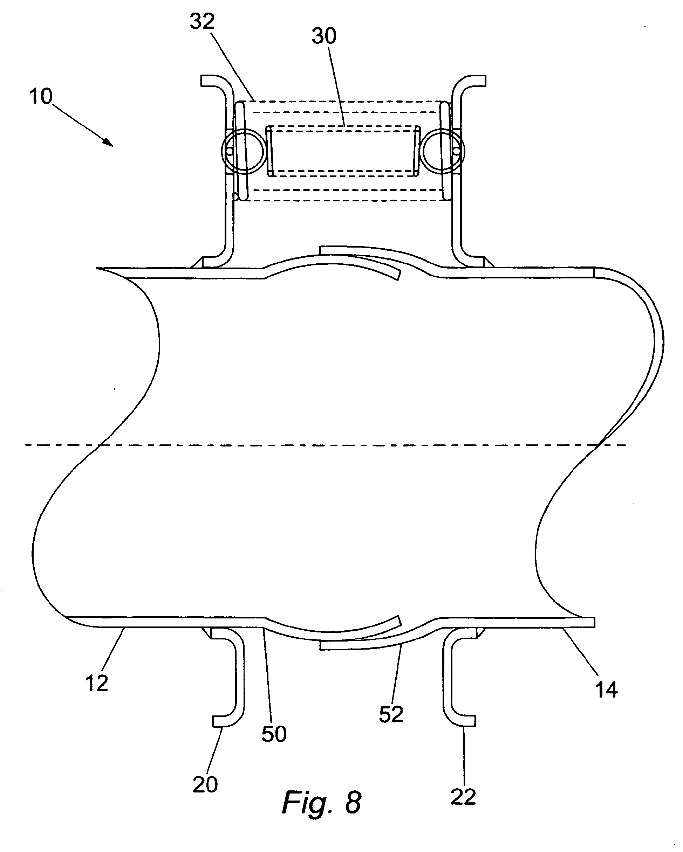

Fig. 8 shows the exhaust coupling 10 in an excessively extended state. If further extension was to occur, exhaust gases within the coupling 10 would be able to escape to atmosphere. However, the stiffness of at least the first spring 30 can be predetermined such that a load which causes this excessive extension is beyond the normal loading conditions. The stiffness of the second spring 32 may also contribute to absorption of impact load.

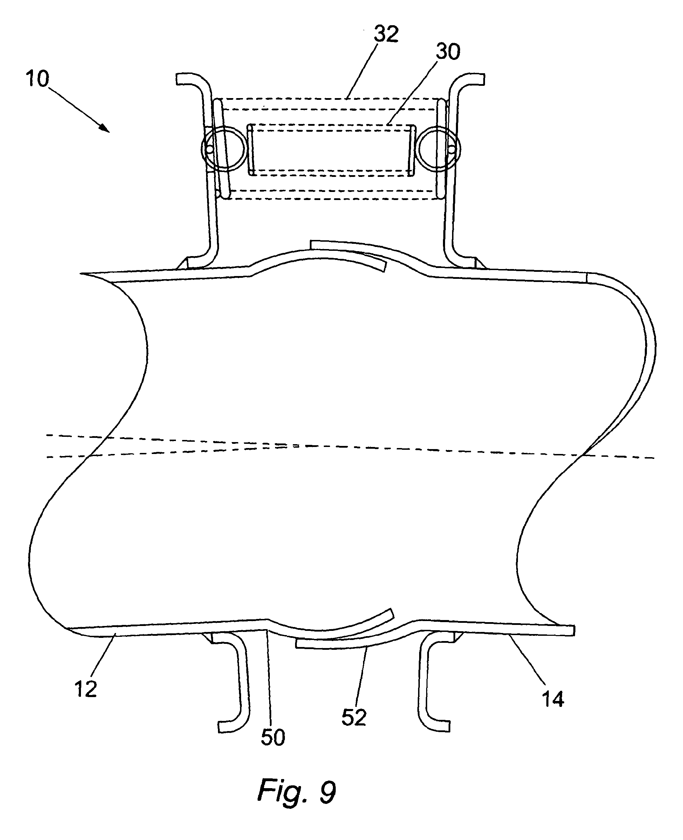

Therefore, the spring arrangement of the coupling 10 provides absorption of an impact load in both the tensile and compressive axial directions. It should also be noted that the spring arrangement of the coupling 10 provides impact absorption when the pipe sections 12, 14 and the coupling 10 experience either a torsional load or a bending load of one of the pipe sections relative to the other. This latter condition is shown in Fig. 9.

The present invention eliminates the need to provide nut and bolt arrangements which add to the cost and complexity of providing or assembling an exhaust coupling.

The dual spring arrangement of the present invention offers other advantages. Firstly, rather than the linear response of a single spring, a non-linear response can be achieved. Also, a different response in tension than in compression can be provided. Also, non-linearity and a different response in the tensile and compressive direction can be used to avoid a resonant response during vibrational loading.

## Claims

1. An exhaust coupling (10) for axially connecting first and second pipe segments (12,14) comprising:
a first flange (20) provided at the first pipe segment (12);
a second flange (22) provided at the second pipe segment (14);
connection means for connecting the first and second flanges (20,22) such that, in a neutral state, an axial gap (40) exists between adjacent ends (50,52) of the first and second pipe segments (12,14); and
biasing means for biasing the first and second pipe segments (12,14) towards the neutral state,
wherein the biasing means comprises a first tension spring (30) and a second compression spring interposing the first and second flange (20,22),
and **characterised in that**:
the first tension spring (30) and the second compression spring (32) are co-axially mounted such that the second compression spring (32) is provided around the first tension spring (30), the biasing means providing absorption of a torsional load applied to one of the first and second pipe segments.

2. An exhaust coupling as claimed in Claim 1, wherein the biasing means is adapted to bias the first and second pipe segments (12,14) from both an extended and a compressed state towards the neutral state.

3. An exhaust coupling as claimed in Claim 1 or 2, wherein the biasing means also provides the connection means.

4. An exhaust coupling as claimed in any preceding claim, wherein a plurality of biasing means are provided circumferentially around the first and second pipe segments (12,14).

5. An exhaust coupling as claimed in Claim 4, wherein three biasing means are provided circumferentially and equidistant around the first and second pipe segments (12,14).

6. An exhaust coupling as claimed in any preceding claim, wherein the first tension spring (30) has a neutral position such that the axial gap (40) exists between adjacent ends (50,52) of the first and second pipe segments (12,14).

7. An exhaust coupling as claimed in any preceding claim, wherein the first tension spring (30) has engaging means (34) provided at each end for engaging with a retaining portion provided at each of the first and second flanges (20,22).

8. An exhaust coupling as claimed in any preceding claim, wherein each of the first and second pipe segments (12,14) has a flared portion provided at the adjacent ends (50,52) of the first and second pipe segments (12,14).

9. An exhaust coupling as claimed in Claim 8, wherein the first and second flanges (20,22) act upon the respective flared portion of the first and second pipe segments (12,14).

10. An exhaust coupling as claimed in any preceding claim, wherein the first flange (20) is connected to the first pipe segment (12), and wherein the second flange (22) is connected to the second pipe segment (14).

## Patentansprüche

1. Eine Auspuffkupplung (10) zum axialen Verbinden eines ersten und eines zweiten Rohrsegments (12, 14), die Folgendes beinhaltet:
einen ersten Flansch (20), der an dem ersten Rohrsegment (12) bereitgestellt ist;
einen zweiten Flansch (22), der an dem zweiten Rohrsegment (14) bereitgestellt ist;
ein Verbindungsmittel zum Verbinden des ersten und des zweiten Flansches (20, 22), so dass in einem neutralen Zustand zwischen den angrenzenden Enden (50, 52) des ersten und des zweiten Rohrsegments (12, 14) ein axialer Zwischenraum (40) besteht; und
ein Vorspannmittel zum Vorspannen des ersten und des zweiten Rohrsegments (12, 14) zu dem neutralen Zustand hin,
wobei das Vorspannmittel eine erste Zugfeder (30) und eine zweite Druckfeder beinhaltet, die zwischen den ersten und den zweiten Flansch (20, 22) eingefügt sind,
und **dadurch gekennzeichnet, dass**:
die erste Zugfeder (30) und die zweite Druckfeder (32) koaxial montiert sind, so dass die zweite Druckfeder (32) um die erste Zugfeder (30) bereitgestellt ist, wobei das Vorspannmittel die Absorption einer Torsionslast, die auf eines von dem ersten und dem zweiten Rohrsegment angewendet wird, bereitstellt.

2. Auspuff kupplung gemäß Anspruch 1, wobei das Vorspannmittel angepasst ist, um das erste und das zweite Rohrsegment (12, 14) sowohl aus einem ausgestreckten als auch einem komprimierten Zustand zu dem neutralen Zustand hin vorzuspannen.

3. Auspuffkupplung gemäß Anspruch 1 oder 2, wobei das Vorspannmittel auch das Verbindungsmittel bereitstellt.

4. Auspuff kupplung gemäß einem der vorhergehenden Ansprüche, wobei eine Vielzahl von Vorspannmitteln peripher um das erste und das zweite Rohrsegment (12, 14) bereitgestellt ist.

5. Auspuffkupplung gemäß Anspruch 4, wobei drei Vorspannmittel peripher und äquidistant um das erste und das zweite Rohrsegment (12, 14) bereitgestellt sind.

6. Auspuffkupplung gemäß einem der vorhergehenden Ansprüche, wobei die erste Zugfeder (30) eine neutrale Position aufweist, so dass der axiale Zwischenraum (40) zwischen den angrenzenden Enden (50, 52) des ersten und des zweiten Rohrsegments (12, 14) besteht.

7. Auspuffkupplung gemäß einem der vorhergehenden Ansprüche, wobei die erste Zugfeder (30) ein Eingriffsmittel (34) aufweist, das an jedem Ende zum Eingriff in einen Halteabschnitt, der an jedem des ersten und des zweiten Flansches (20, 22) bereitgestellt ist, bereitgestellt ist.

8. Auspuffkupplung gemäß einem der vorhergehenden Ansprüche, wobei jedes von dem ersten und dem zweiten Rohrsegment (12, 14) einen Bördelabschnitt aufweist, der an den angrenzenden Enden (50, 52) des ersten und des zweiten Rohrsegments (12, 14) bereitgestellt ist.

9. Auspuffkupplung gemäß Anspruch 8, wobei der erste und der zweite Flansch (20, 22) auf den jeweiligen Bördelabschnitt des ersten und des zweiten Rohrsegments (12, 14) wirken.

10. Auspuffkupplung gemäß einem der vorhergehenden Ansprüche, wobei der erste Flansch (20) mit dem ersten Rohrsegment (12) verbunden ist, und wobei der zweite Flansch (22) mit dem zweiten Rohrsegment (14) verbunden ist.

## Revendications

1. Un raccord d'échappement (10) destiné à raccorder de façon axiale des premier et deuxième segments de tuyau (12, 14) comprenant :
un premier flasque (20) fourni au niveau du premier segment de tuyau (12) ;
un deuxième flasque (22) fourni au niveau du deuxième segment de tuyau (14) ;
un moyen de raccordement destiné à raccorder les premier et deuxième flasques (20, 22) de façon à ce que, dans un état neutre, un espace axial (40) existe entre des extrémités adjacentes (50, 52) des premier et deuxième segments de tuyau (12, 14) ; et
un moyen de décalage destiné à décaler les premier et deuxième segments de tuyau (12, 14) en direction de l'état neutre,
où le moyen de décalage comprend un premier ressort de tension (30) et un deuxième ressort de compression s'interposant entre les premier et deuxième flasques (20, 22),
et **caractérisé en ce que** :
le premier ressort de tension (30) et le deuxième ressort de compression (32) sont montés de façon coaxiale de façon à ce que le deuxième ressort de compression (32) soit fourni autour du premier ressort de tension (30), le moyen de décalage fournissant l'absorption d'une force de torsion appliquée sur un segment parmi
les premier et deuxième segments de tuyau.

2. Un raccord d'échappement tel que revendiqué dans la revendication 1, où le moyen de décalage est adapté pour décaler les premier et deuxième segments de tuyau (12, 14) à la fois depuis un état étendu et un état comprimé en direction de l'état neutre.

3. Un raccord d'échappement tel que revendiqué dans la revendication 1 ou la revendication 2, où le moyen de décalage fournit aussi le moyen de raccordement.

4. Un raccord d'échappement tel que revendiqué dans n'importe quelle revendication précédente, où une pluralité de moyens de décalage sont fournis de façon circonférentielle autour des premier et deuxième segments de tuyau (12, 14).

5. Un raccord d'échappement tel que revendiqué dans la revendication 4, où trois moyens de décalage sont fournis de façon circonférentielle et équidistante autour des premier et deuxième segments de tuyau (12, 14).

6. Un raccord d'échappement tel que revendiqué dans n'importe quelle revendication précédente, où le premier ressort de tension (30) a une position neutre de façon à ce que l'espace axial (40) existe entre des extrémités adjacentes (50, 52) des premier et deuxième segments de tuyau (12, 14).

7. Un raccord d'échappement tel que revendiqué dans n'importe quelle revendication précédente, où le premier ressort de tension (30) présente un moyen de prise (34) fourni au niveau de chaque extrémité destiné à se mettre en prise avec une portion de retenue fournie au niveau de chacun des premier et deuxième flasques (20, 22).

8. Un raccord d'échappement tel que revendiqué dans n'importe quelle revendication précédente, où chacun des premier et deuxième segments de tuyau (12, 14) présente une portion évasée fournie au niveau des extrémités adjacentes (50, 52) des premier et deuxième segments de tuyau (12, 14).

9. Un raccord d'échappement tel que revendiqué dans la revendication 8, où les premier et deuxième flasques (20, 22) exercent une action sur la portion évasée respective des premier et deuxième segments de tuyau (12, 14).

10. Un raccord d'échappement tel que revendiqué dans n'importe quelle revendication précédente, où le premier flasque (20) est raccordé au premier segment de tuyau (12), et où le deuxième flasque (22) est raccordé au deuxième segment de tuyau (14).
